# EUROPEAN PATENT SPECIFICATION

(11) **EP 2 358 620 B1**
(45) Date of publication and mention of the grant of the patent: **05.07.2017**
(21) Application number: 09748323.4
(22) Date of filing: 04.11.2009
(51) Int. Cl.: G05B 19/042, H04N 1/00, G06F 3/12, B65H 43/00, B65H 45/04

(54) **METHOD FOR CONFIGURING A DOCUMENT FINISHING DEVICE, AND DOCUMENT FINISHING DEVICE**
VERFAHREN FÜR DIE KONFIGURIERUNG EINES BLATTENDBEARBEITUNGSGERÄTS, UND BLATTENDBEARBEITUNGSGERÄT
PROCÉDÉ POUR LA CONFIGURATION D'UN DISPOSITIF DE FINITION DE FEUILLES, ET APPAREIL POUR LA FINITION DE FEUILLES

(30) Priority: 17.11.2008 EP 08169236
(43) Date of publication of application: 24.08.2011
(73) Proprietor: OCE-Technologies B.V., 5900 CA Venlo (NL)
(72) Inventor: WIND, Anne A., NL-5642 CH Eindhoven (NL)
(74) Representative: OCE IP Department
(86) International application number: PCT/EP2009/064580
(87) International publication number: WO 2010/054964

(56) References cited:
- GB-A- 2 163 704
- JP-A- 2001 139 220
- US-A1- 2001 056 449

## Description

The present invention relates to a method for configuring a document finishing device, such as a folding, binding or stapling machine, and to a method for configuring such a device.

Document finishing devices, such as folding, binding or stapling machines often offer a lot of possibilities to users, see e.g. US 2001/0056449 A1 or JP 2001-139220 A, but only a limited subset of these possibilities is used throughout the life span of the product. For example, a folding machine may be able to fold a large range of paper formats, according to a variety of folding ways, but a user only uses one or two paper formats, which he uses to fold according to one or two folding ways. Nevertheless it is desired that all possibilities of the device are in principle available to a user, but it is undesired that a user interface of the device needs to be adapted to disclose all the possibilities, since this often requires an extended keyboard, or even a display device.

It is a goal of the present invention to take away the need for such an extended keyboard or a user interface, while maintaining the full range of possibilities offered.

The present invention therefore provides a method for configuring a document finishing device, such as a folding-, binding or stapling according to the appended claim 1. One data storage device may be used to store commands for several document finishing devices, and physical keys may comprise buttons and other touch-enabled sensors, or even a touch-screen.

Step (A) is in general performed only once for each user. After that a user can take his personal portable storage device to the apparatus at a time that the use of the document finishing device is desired, connect the portable data storage device to the document finishing device (B) and have the data read into the document storage device (C), upon which the at least one key of the data storage device is configured (D), and the document finishing device can be used. Step (B) may comprise connecting the device wirelessly. A method may further comprise the step (E) of selecting the command from a set of commands executable by the device.

Herein, various users may store their own personal key configurations on their own data storage device, which can be embodied by a USB stick, a CD-ROM, a Bluetooth enabled device, a magnetic card or any other portable machine readable device to which data can be written.

Performing step (A), and thus writing data to the portable data storage device may be performed on a computer having at least a display, such as a personal computer, a laptop or a PDA. The computer should therefore be provided with set of commands executable by the device. A software application, provided for example by the manufacturer of the document finishing device, may be run on the computer for that goal. This application can be installed locally on the computer, or be run from a CD-Rom or a website. This way, an efficient use is made from the hardware already present in the local area where the document finishing device is placed.

Preferably, executing the software for performing step (A) comprises running a so-called wizard application on the display device, for guiding a user at least in performing step (A), and for example also step (E). A wizard is a software program that leads a user through the necessary steps to be performed. Here, it presents the commands executable by the document finishing device to the user, so the user can assign a subset of these commands to the programmable keys available on the document finishing device, and it assists the user in saving or storing these commands on the portable data storage device.

In a preferred embodiment, the method according to the present invention further comprises the steps of (F) storing operating software for the document finishing device on the data storage device and (G) updating the document finishing device with the operating software. Operating software is to be understood as software the document finishing device needs to perform it desired function. This software, also called firmware, is loaded into the device by the manufacturer. From time to time, updates or improved (newer) versions of this firmware may be present, which then need to be loaded into the device. Instead of sending a technician to the document finishing device, the document finishing device may be adapted to scan a portable data storage device for firmware updates, and to replace or update its presently loaded software with the update. Just like reading the data comprising commands to be associated with the physical keys, the software-updates may be read from the data storage device wirelessly, for example with Bluetooth. A method may further comprise (H) generating a legend of the configured keys on the device. The document finishing device may thereto be equipped with an area that is configured to receive the legend. This area may be close to, or even on the keys, and may preferably be equipped with a transparent cover behind which a paper printed copy of the names of the key commands can be exposed.

In the above context the invention relates to a method for configuring a document finishing device, such as a folding, binding or stapling machine, comprising the steps of step A. storing data relating to at least one command executable by at least one document finishing device on a portable data storage device; step B. connecting the portable data storage device to the document finishing device; step C. reading the stored data from the data storage device into the document finishing device; and step D. assigning the selected command to at least one physical key of the document finishing device, based on the data read from the data storage device. A method may comprise step E. selecting, before step A, at least one command from a set of commands executable by at least one document finishing device. In an embodiment step A is performed by means of a computer comprising a display, wherein this embodiment may comprise running a wizard application on the computer for guiding a user. In an embodiment the method may further comprise the steps of step F. storing operating software for the document finishing device onto the data storage device prior to connecting the portable data storage device to the document finishing device according to step B; and step G. updating the document finishing device with the operating software, after connecting the portable data storage device to the document finishing device according to step B. In an embodiment step C comprises wirelessly reading the data from the data storage device. It maybe appreciated that a method may comprise a the step H. wherein a legend for the at least one physical key is generated. This step H may comprise providing a printed copy of the legend.

In an other aspect the invention relates to a document finishing device, such as a folding, binding or stapling machine, in particular for performing any one or all of steps A to D, wherein the document finishing device comprises at least one configurable physical key for entering at least one command to the device and a data exchange interface for connecting the document finishing device to a portable data storage device and means for reading data from the data storage device and means for assigning at least one command to the at least one key, based on data read from the data storage device. In an embodiment of the document finishing device, the data exchange interface is a wireless interface and may comprise a data carrier for storing operational software.

A portable data storage device comprises data relating to at least one command executable by a document finishing device as described hereabove. The portable data storage device may further comprise operational software for the document finishing device.

The present invention will now be explained into more detail referring to the following non limitative figures, in which:
- Figure 1 shows a document finishing device 1, more in particular a paper folding machine;
- Figure 2 shows the device 1 from figure 1 from another perspective;
- Figure 3 shows a detailed partial view of the device from figures 1 and 2;
- Figure 4a shows another detailed view of the document finishing device 1 from any of the previous figures; and
- Figure 4b shows a user, handling the piece of paper, that is being finished by the device 1 from figure 4a.

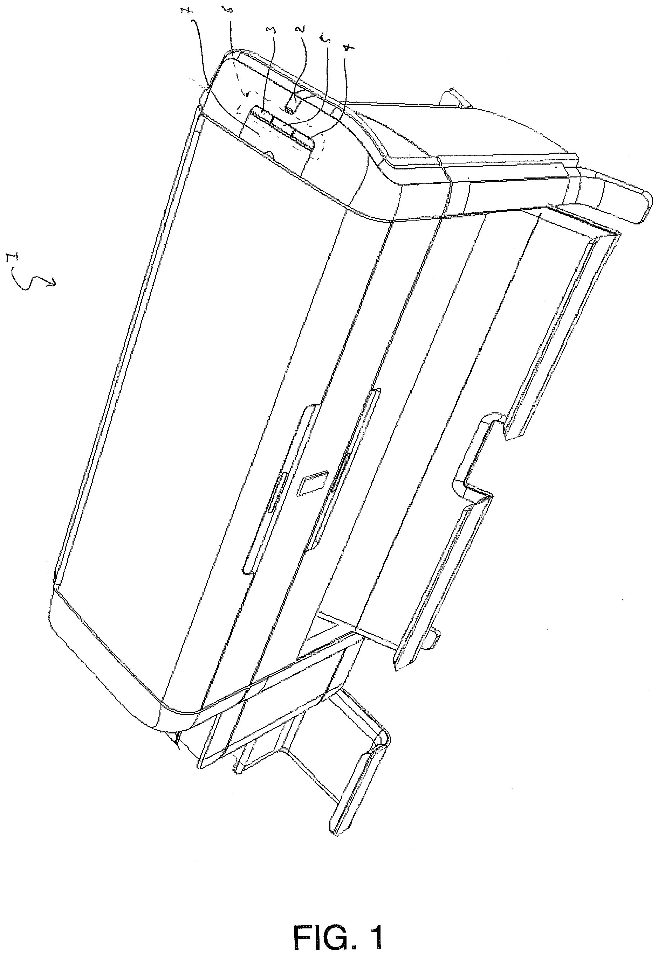

Figure 1 shows a document finishing device 1, more in particular a paper folding machine. The document finishing device 1 is equipped with a USB connector 2, to which a portable data storage device (here embodied by a USB stick that is not shown) can be connected. The document finishing device 1 is configured to read data from the data storage device, and to configure the keys 3, 4, 5 from a keyboard 6 according to the data on the data storage device. The device 1 is furthermore configured to scan the portable data storage device for software updates, and to replace software already installed on the document finishing device 1 by software on the portable data storage device.

Adherent to the keyboard 6 a transparent window 7 is provided. The window is arranged such that a piece of printed paper can be placed under the window 7. The window 7 can be used to place a paper comprising names or icons referring to the commands that are coupled to the keys near the keys 3, 4, 5, so a user can visually determine the functions of the keys 3, 4, 5. The software on the PC of the user may be equipped to print such a paper, corresponding to the data recorded on the portable data storage device.

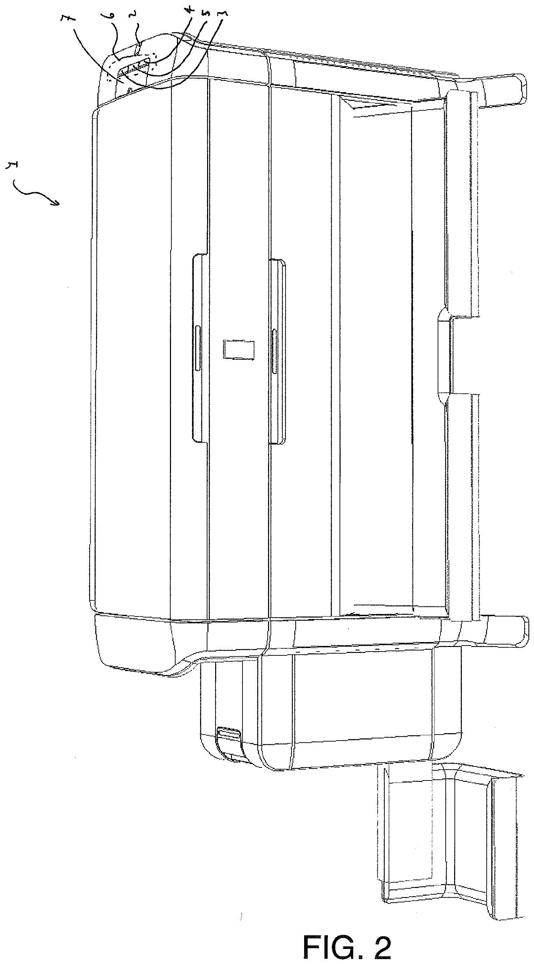

Figure 2 shows the device 1 from figure 1 from another perspective, i.e. straight from the front-side. In figure 2, like reference numbers refer to like features from figure 1.

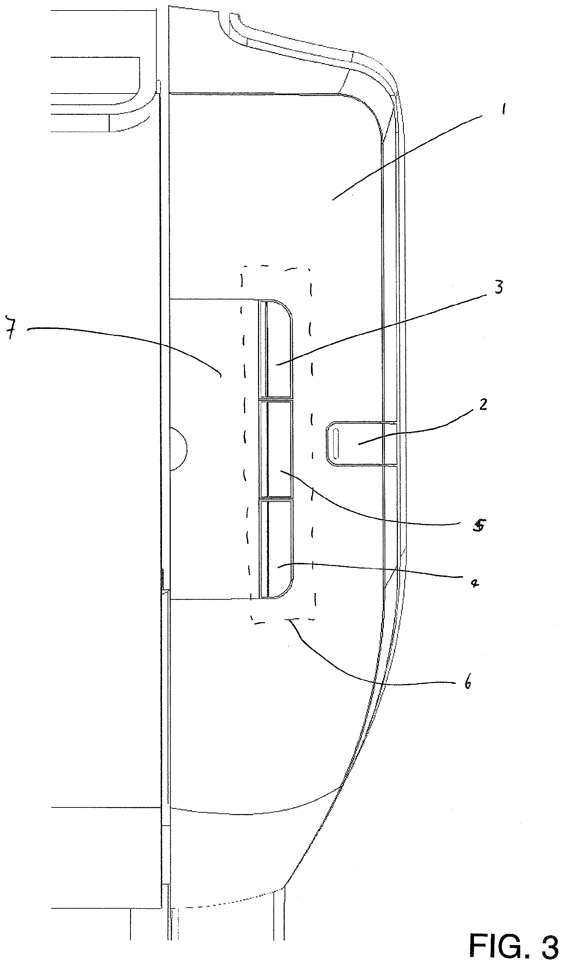

Figure 3 shows a detailed partial view of the device from figures 1 and 2. In particular, the keys 3, 4, 5 forming a keyboard 6 on the document finishing device 1 are shown. Adherent to the keyboard 6 the transparent window 7 is visible, arranged such that a piece of printed paper can be placed under the window 7. Keys 3, 4, 5 read configuration data from a data storage device such that the functions of the keys 3, 4, 5 are configurable for users. This configuration may vary e.g. for each specific end-user or may vary for each group of customers or type of customers. A piece of paper may act as a reminder for each user, or may alternatively act as a reminder for the configuration of all users together.

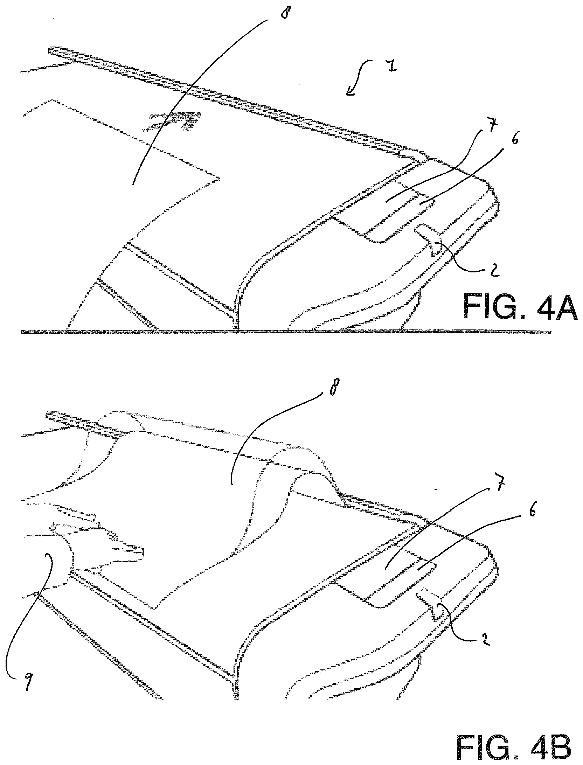

Figure 4a shows another detailed view of the document finishing device 1 from any of the previous figures. A user (not shown) is putting a piece of paper to be folded according to a predetermined folding pattern or scheme on the document finishing device 1. The piece of paper may have various formats that can be handled by the folding machine. For example standardized formats like A0 format, A1 format, A2 format, A3 format, A4 format, industrial drawing formats, or customized formats the paper folding machine is able to handle.

A user may define one or several presets for keys 3, 4, 5 on a workstation, or e.g. download a set of presets for the configuration of the keys 3, 4, 5. A software wizard simplifies the definition of these presets, or alternatively a user uses a programming language to set the configurations. Such a software wizard enables a graphical user interface for the user to preset one or more finishing programs and optionally prints a piece of paper which may be placed behind a transparent cover as a reminder of the programmed presets. The programmed configurations of the keys 3, 4, 5 may now be stored on a portable storage device such as a USB device and thereby transferred to the finishing device permanently or temporarily during the actual usage of the finishing device.

After the user has coupled his portable data storage device to the USB connector 2, he can use the keyboard 6 to operate the device 1. Behind the transparent window 7, a piece of printed paper can be placed, in order to explain what folding operations are coupled to what keys of the keyboard 6. For example the first key may have the command to fold the piece of paper twice about it's length in different orientations and after that once about it's width assigned, so that a map-like folded piece of paper may be obtained. The second key may have the command to fold the piece of paper twice about its width; the first fold at half of the width, and the second fold at three quarters of the width, so that a prospect-folder-like piece of paper is obtained. The third key may for example have the command to fold the piece of paper once about the middle axis of its width, and staple it afterwards.

Figure 4b shows a user 9, handling the piece of paper 8, that is being finished by the device 1 from figure 4a. The portable storage device is still coupled to the USB connector 2, and further operation of the device can be controlled via the keyboard 6. The device is performing an operation that was demanded by the user via the keyboard 6.

The operation may have been selected from an overview of possible options that was presented to the user by configuration software on his PC, or it may have been preconfigured by a system administrator, who determines what option of the document finishing device are made available to a certain user.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure.

Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

## Claims

1. Method for configuring a document finishing device (1), such as a folding, binding or stapling machine, **characterised by** comprising the steps of:
A. storing data relating to at least one command executable by at least one document finishing device on a portable data storage device;
B. connecting the portable data storage device to the document finishing device (1);
C. reading the stored data from the data storage device into the document finishing device (1); and
D. assigning the selected command to at least one physical key (3 - 5) of the document finishing device (1), based on the data read from the data storage device.

2. Method according to claim 1, further comprising the steps of:
F. storing operating software for the document finishing device (1) onto the data storage device prior to connecting the portable data storage device to the document finishing device (1) according to step B; and
G. updating the document finishing device (1) with the operating software, after connecting the portable data storage device to the document finishing device (1) according to step B.

3. Document finishing device (1), such as a folding, binding or stapling machine, in particular for performing the method according to claim 1, comprising:
- a data exchange interface for connecting the document finishing device (1) to a portable data storage device;
- means for reading data from the data storage device;
**characterised by** further comprising:
- at least one configurable physical key (3 - 5) for entering at least one command to the device (1); and
- means for assigning at least one command to the at least one key (3 - 5), based on data read from the data storage device.

## Patentansprüche

1. Verfahren zum Konfigurieren einer Endbearbeitungsvorrichtung (1) für Dokumente, beispielsweise einer Falt-, Binde- oder Heftmaschine, **dadurch gekennzeichnet, dass** es die folgenden Schritte aufweist:
A. Speichern von Daten, die sich auf wenigstens einen Befehl beziehen, der durch wenigstens eine Endbearbeitungsvorrichtung für Dokumente ausführbar ist, auf einer tragbaren Datenspeichereinrichtung;
B. Verbinden der tragbaren Datenspeichereinrichtung mit der Endbearbeitungsvorrichtung (1);
C. Einlesen der gespeicherten Daten aus der Datenspeichereinrichtung in die Endbearbeitungsvorrichtung (1); und
D. Zuordnen des ausgewählten Befehls zu wenigstens einer physikalischen Taste (3 - 5) der Endbearbeitungsvorrichtung (1) auf der Grundlage der aus der Datenspeichereinrichtung gelesenen Daten.

2. Verfahren nach Anspruch 1, mit den weiteren Schritten:
F. Speichern von Betriebssoftware für die Endbearbeitungsvorrichtung (1) auf der Datenspeichereinrichtung vor dem Verbinden der tragbaren Datenspeichereinrichtung mit der Endbearbeitungsvorrichtung (1) gemäß Schritt B; und
G. Aktualisieren der Endbearbeitungsvorrichtung (1) für Dokumente mit der Betriebssoftware nach dem Verbinden der tragbaren Datenspeichereinrichtung (1) mit der Endbearbeitungsvorrichtung (1) gemäß Schritt B.

3. Endbearbeitungsvorrichtung (1) für Dokumente, beispielsweise Falt-, Binde- oder Heftmaschine, insbesondere zur Ausführung des Verfahrens nach Anspruch 1, mit:
- einer Datenaustauschschnittstelle zum Verbinden der Endbearbeitungsvorrichtung (1) mit einer tragbaren Datenspeichereinrichtung;
- Mitteln zum Lesen von Daten aus der Datenspeichereinrichtung; **dadurch gekennzeichnet, dass** sie weiterhin aufweist:
- wenigstens eine konfigurierbare physikalische Taste (3 - 5) zur Eingabe wenigstens eines Befehls in die Vorrichtung (1) und
- Mitteln zum Zuweisen wenigstens eines Befehls zu der wenigstens einen Taste (3 - 5) auf der Grundlage von Daten, die aus der Datenspeichereinrichtung gelesen wurden.

## Revendications

1. Procédé pour configurer un dispositif de finition de document (1), tel qu'une machine de pliage, de reliure ou d'agrafage, **caractérisé en ce qu'**il comprend les étapes suivantes :
A. stockage de données se rapportant à au moins un ordre exécutable par au moins un dispositif de finition de document sur un dispositif portatif de stockage de données ;
B. connexion du dispositif portatif de stockage de données au dispositif de finition de document (1) ;
C. lecture des données stockées à partir du dispositif de stockage de données par le dispositif de finition de document (1) ; et
D. attribution de l'ordre sélectionné à au moins une touche physique (3 - 5) du dispositif de finition de document (1), sur la base des données lues à partir du dispositif de stockage de données.

2. Procédé selon la revendication 1, comprenant en outre les étapes suivantes :
F. stockage d'un logiciel d'exploitation pour le dispositif de finition de document (1) sur le dispositif de stockage de données avant de connecter le dispositif portatif de stockage de données au dispositif de finition de document (1) selon l'étape B ; et
G. mise à jour du dispositif de finition de document (1) avec le logiciel d'exploitation, après connexion du dispositif portatif de stockage de données au dispositif de finition de document (1) selon l'étape B.

3. Dispositif de finition de document (1), comme une machine de pliage, de reliure ou d'agrafage, en particulier pour effectuer le procédé selon la revendication 1, comprenant :
- une interface d'échange de données pour connecter le dispositif de finition de document (1) à un dispositif portatif de stockage de données ;
- un moyen pour lire des données à partir du dispositif de stockage de données ; caractérisé comme comprenant en outre :
- au moins une touche physique configurable (3 - 5) pour entrer au moins un ordre dans le dispositif (1) ; et
- un moyen pour attribuer au moins un ordre à l'au moins une touche (3 - 5), en se basant sur des données lues à partir du dispositif de stockage de données.
